# EUROPÄISCHE PATENTSCHRIFT

(11) **EP 0 439 665 B1**
(45) Veröffentlichungstag und Bekanntmachung des Hinweises auf die Patenterteilung: **09.06.1993**
(21) Anmeldenummer: 90107184.5
(22) Anmeldetag: 14.04.1990
(51) Int. Cl.: B23K 11/06

(54) **Platinenschweissmaschine**
Welding machine for flat bars
Machine à souder pour largets

(30) Priorität: 29.01.1990 CH 267/90
(43) Veröffentlichungstag der Anmeldung: 07.08.1991
(73) Patentinhaber: ELPATRONIC AG, CH-6300 Zug (CH)
(72) Erfinder: Beyer, Eduard, CH-9202 Gossau (CH); Cadalbert, Florin, CH-8405 Winterthur (CH)

(56) Entgegenhaltungen:
- FR-A- 2 552 357
- INDUSTRIE-ANZEIGER no. 83, 17 Oktober 1989, Leinfelden-Echterdingen,DE; Seiten 30 - 31; E.FREULER: "Platinenschweissen"

## Beschreibung

Die Erfindung betrifft eine Platinenschweißmaschine mit
- einem mittleren Maschinenteil, an dem zwei Klemmvorrichtungen für je eine Platine sowie eine Schweißvorrichtung zum Verschweißen von einander überlappenden Rändern der Platinen angeordnet sind,
- einem Antrieb zum Erzeugen einer Relativbewegung längs der vorgesehenen Schweißnaht zwischen der Schweißvorrichtung und den Klemmvorrichtungen und
- zwei auf je einer Seite des mittleren Maschinenteils angeordneten Zuführtischen, auf denen sich je eine Platine quer zur vorgesehenen Schweißnaht durch je eine der Klemmvorrichtungen hindurch in eine Überlappungsstellung zuführen läßt.

Eine bekannte Platinenschweißmaschine dieser Gattung (DE-Zeitschrift "Industrie-Anzeiger" 83/1989, S. 30/31) arbeitet nach der Rollnahtschweißtechnik mit zwei Elektrodenrollen, die auf den einander in einem schmalen Bereich überlappenden Rändern der Platinen mit solchem Druck und unter solchem elektrischem Strom abwälzbar sind, daß eine Überlapptquetschnaht entsteht. Dabei wird die erforderliche Relativbewegung zwischen der Schweißvorrichtung und den beiden Platinen dadurch erzeugt, daß die Platinen in Richtung der Schweißnaht in bezug auf die Elektrodenrollen vorgeschoben werden. Es ist jedoch auch möglich, bei einer Platinenschweißmaschine der beschriebenen Gattung die Platinen während des Schweißens ortsfest anzuordnen und die Schweißvorrichtung die erforderliche Längsbewegung in bezug auf die Platinen durchführen zu lassen.

In jedem Fall ist es erforderlich, die miteinander zu verschweißenden Ränder der Platinen derart übereinander zu schieben, daß sie sich auf ihrer gesamten Länge um einen vorgegebenen Betrag überlappen. Dieser Betrag muß vor allem dann besonders genau eingehalten werden, wenn eine Überlapptquetschtnaht geschweißt werden soll.

Die erforderliche Überlappung der Platinen läßt sich beispielsweise dadurch einstellen, daß man die miteinander zu verschweißenden Ränder der Platinen in je eine Nut einer sogenannten Z-Schiene einschiebt, die anschließend zurückgezogen wird. Das Profil der Z-Schiene ist so gestaltet, daß die beiden Platinen beim Übereinanderschieben ihrer Ränder nicht gegeneinanderstoßen können und daß ein für allemal festgelegt ist, welcher der beiden Ränder auf dem anderen zu liegen kommt. Diese Festlegung ist mit Rücksicht auf die spätere Verwendung der miteinander verschweißten Platinen vor allem dann von Bedeutung, wenn die Platinen aus Blechen unterschiedlicher Dicke, Qualität oder Oberflächenbehandlung bestehen.

Das bisher übliche Zurückziehen der Z-Schiene, nachdem die Bleche in ihrer Überlapptstellung festgelegt worden sind, ist umständlich. Wenn man aber darauf verzichtet hat, die Z-Schiene vor Beginn des Schweißens zurückzuziehen und stattdessen die Platinen durch Verschieben der Klemmvorrichtungen erst während des Schweißens aus der Z-Schiene herausbewegt hat, ist es vor allem bei längeren Schweißnähten nicht immer möglich gewesen, eine vorgesehene Überlappungsbreite mit der angestrebten Genauigkeit einzuhalten.

Der Erfindung liegt deshalb die Aufgabe zugrunde, die miteinander zu verschweißenden Ränder von Platinen ohne eine Z-Schiene derart zu führen, daß sie bei einer Zustellbewegung quer zur Längsrichtung der vorgesehenen Schweißnaht in die erforderliche Überlappungsstellung gelangen.

Die Aufgabe ist erfindungsgemäß ausgehend von einer Platinenschweißmaschine der eingangs beschriebenen Gattung dadurch gelöst, daß zwischen den beiden Klemmvorrichtungen zum Abstützen des zu verschweißenden Randes der auf einem der beiden Zuführtische zugeführten Platine eine Stützvorrichtung angeordnet ist, die aus einer Stützstellung, in der sie den zu verschweißenden Rand der betreffenden Platine abstützt, in eine Ruhestellung bewegbar ist, in der sie diesen Rand sich auf den Rand der anderen Platine auflegen läßt.

Die erfindungsgemäße Stützvorrichtung hindert selbst Platinen, die nicht ganz eben sind, beim Zusammenschieben mit den Kanten ihrer miteinander zu verschweißenden Ränder gegeneinander zu stoßen. In ihrer Ruhestellung übt die Stützvorrichtung keinerlei Kraft mehr auf die von ihr zuvor abgestützte Platine aus; die miteinander zu verschweißenden Platinenränder liegen dann in einer Ebene aufeinander, die allein durch die Anordnung der Klemmvorrichtungen festgelegt ist.

Die Stützvorrichtung ist zweckmäßigerweise um eine zur vorgesehenen Schweißnaht parallele Achse zwischen der Stützstellung und der Ruhestellung hin- und herdrehbar.

Zusätzlich zu der Stützvorrichtung, mit der sich der Rand einer der Platinen abstützen läßt, ist bei einer bevorzugten Ausführungsform der Erfindung zwischen den beiden Klemmvorrichtungen ferner eine Niederhaltvorrichtung für den zu verschweißenden Rand der anderen Platine angeordnet. Diese Anordnung einer Stützvorrichtung und einer Niederhaltevorrichtung ermöglicht es, ein Gegeneinanderstoßen der Kanten der miteinander zu verschweißenden Platinenränder schon dann sicher zu vermeiden, wenn jeder dieser Platinenränder nur sehr geringfügig aus der zugehörigen Platinenebene angehoben bzw. abgesenkt wird.

Die im vorstehenden beschriebenen Merkmale sind vorzugsweise dadurch weitergebildet, daß
- die Stützvorrichtung zwei symmetrisch angeordnete Stützkörper aufweist,
- die Niederhaltevorrichtung zwei symmetrisch angeordnete Niederhaltekörper aufweist, und
- Stützvorrichtung und Niederhaltevorrichtung gegenläufig um je eine zur vorgesehenen Schweißnaht parallele Achse zwischen zwei Endstellungen hin- und herdrehbar sind, in denen jeweils ein Stützkörper einem Niederhaltekörper schräg gegenübersteht.

Diese Weiterbildung der Erfindung hat den besonderen Vorteil, daß von Fall zu Fall gewählt werden kann, welcher von zwei miteinander zu verschweißenden Platinenrändern auf dem anderen liegen soll.

Die erfindungsgemäße Stützvorrichtung und Niederhaltevorrichtung können auch dazu dienen, die Überlappungsbreite der miteinander zu verschweißenden Platinenränder festzulegen. Zu diesem Zweck kann vorgesehen sein, daß
- jeder Stützkörper eine Abweisfläche für die von ihm zu stützende Platine sowie eine Anschlagfläche für die von einem Niederhaltekörper niederzuhaltende Platine aufweist, und
- jeder Niederhaltekörper eine Abweisfläche für die von ihm niederzuhaltende Platine sowie eine Anschlagfläche für die von einem Stützkörper zu stützende Platine aufweist.

Solche Anschlagflächen brauchen indessen nicht vorgesehen oder, falls vorhanden, nicht als solche benutzt zu werden, wenn die beiden Zuführtische CNC-gesteuert quer zur vorgesehenen Schweißnaht zustellbar sind und je mindestens eine Aufspannvorrichtung für eine Platine sowie je eine Anschlagleiste tragen, die parallel zur vorgesehenen Schweißnaht angeordnet und aus einer Anschlagstellung zum Vorjustieren der zugehörigen Platine in eine Ruhestellung bewegbar ist.

Ein Ausführungsbeispiel der Erfindung wird im folgenden anhand schematischer Zeichnungen mit weiteren Einzelheiten erläutert. Es zeigen:
- Fig. 1: die Draufsicht einer erfindungsgemäßen Platinenschweißmaschine,
- Fig. 2: die Seitenansicht in Richtung des Pfeils II in Fig. 1,
- Fig. 3: die Schrägansicht eines Teils der Maschine in Richtung des Pfeils III in Fig. 1,
- Fig. 4a: den senkrechten Schnitt IV-IV in Fig. 2 in einer ersten Betriebsstellung,
- Fig. 4b: denselben Schnitt in einer zweiten Betriebsstellung,
- Fig. 5: die Schrägansicht in Richtung des Pfeils V in Fig. 1 und
- Fig. 6: die Schrägansicht in Richtung des Pfeils VI in Fig. 2.

Die dargestellte Maschine hat ein mittleres Maschinenteil 10 mit einem Ständer 12, von dem ein oberer Ausleger 14 und ein unterer Ausleger 16 in gleicher Richtung wegragen. Der untere Ausleger 16 ruht auf zusätzlichen Stützen 18. Am mittleren Maschinenteil 10 ist eine ortsfeste Schweißvorrichtung 20 angeordnet; dazu gehören eine obere Elektrodenrolle 22, die mittels einer Anpreßvorrichtung 24 höheneinstellbar nahe dem freien Ende des oberen Auslegers 14 gelagert ist, und eine untere Elektrodenrolle 26, die senkrecht unterhalb der oberen Elektrodenrolle 22 am unteren Ausleger 16 gelagert ist. Die beiden Elektrodenrollen 22 und 26 sind um je eine waagerechte Achse drehbar und sind mindestens annähernd in einer gemeinsamen senkrechten Ebene angeordnet, die zugleich Mittelebene M der gesamten Schweißmaschine ist.

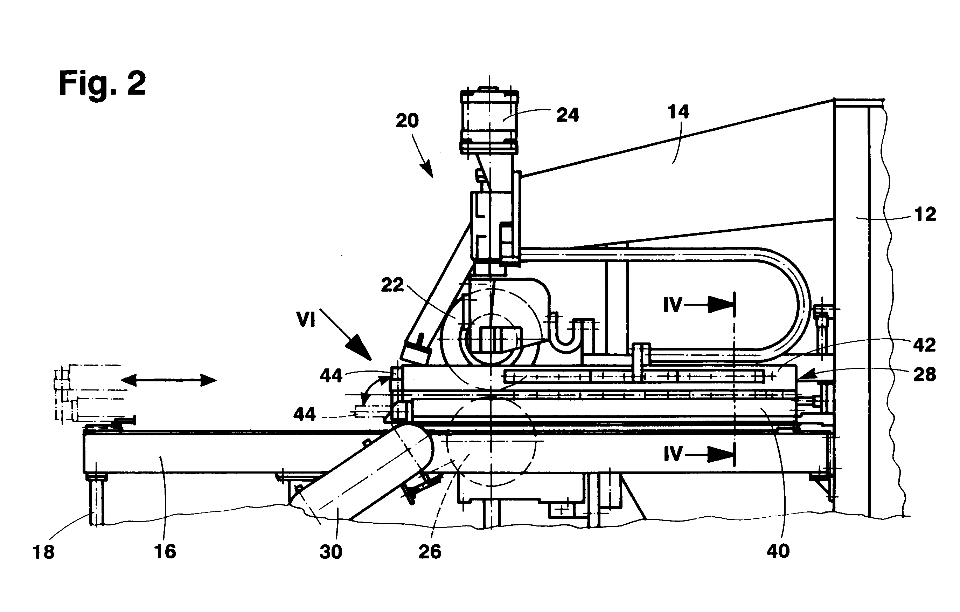

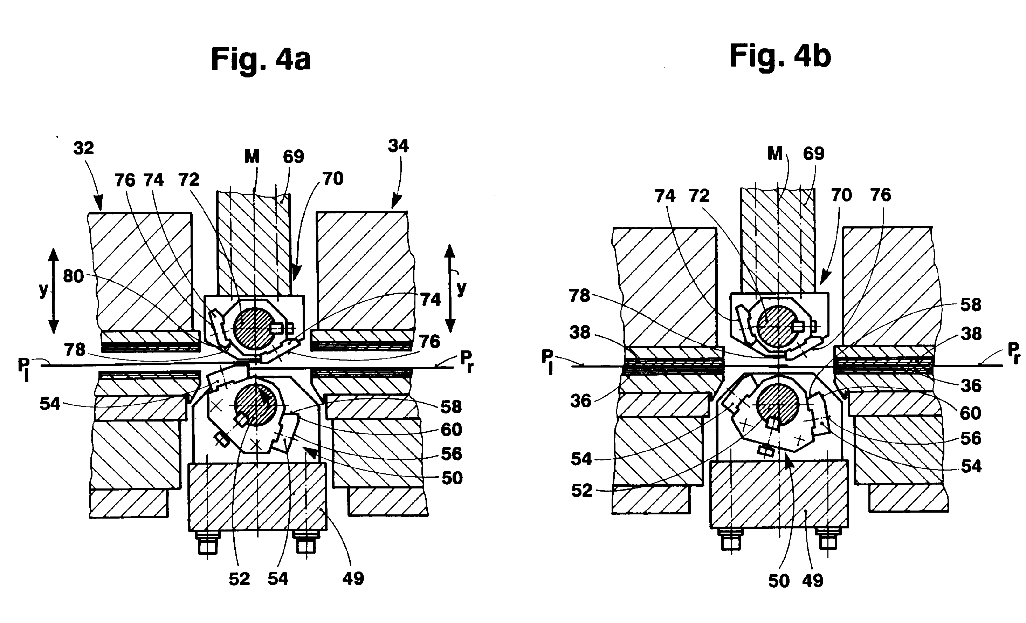

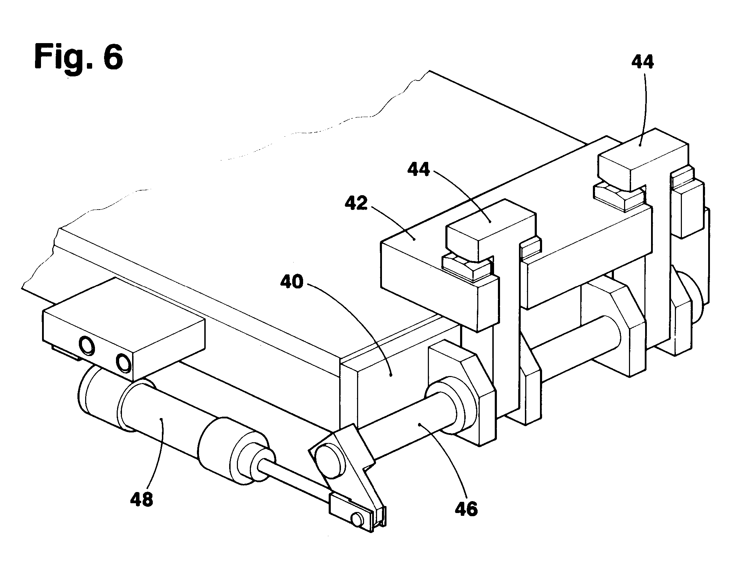

Am unteren Ausleger 16 ist ein Schweißwagen 28 in der genannten Mittelebene M waagerecht verschiebbar geführt und mittels eines Antriebs 30 aus einer in Fig. 2 mit vollen Linien abgebildeten Ruhestellung nahe dem Ständer 12 in eine mit strichpunktierten Linien angedeutete Endstellung bewegbar. Auf dem Schweißwagen 28 ist beiderseits der Mittelebene M und parallel zu dieser je eine Klemmvorrichtung 32 und 34 angeordnet. Die beiden Klemmvorrichtungen 32 und 34 sind in bezug zur Mittelebene symmetrisch gestaltet und angeordnet und haben je einen oder mehrere untere Klemmbacken 36 sowie je einen oder mehrere obere Klemmbacken 38. Die unteren Klemmbacken 36 sind an einem Unterbalken 40 des Schweißwagens 28 befestigt. Die oberen Klemmbacken 38 sind entsprechend den Pfeilen y in Fig. 4a höhenverstellbar, beispielsweise mittels hydraulischer Kolbenzylindereinheiten, an einem waagerechten Oberbalken 42 abgestützt, der sich in der Mittelebene M erstreckt, an seinem dem Ständer 12 benachbarten Ende starr am Schweißwagen 28 befestigt ist und an seinem gegenüberliegenden Ende gemäß Fig. 6 mit dem Unterbalken 40 verriegelbar ist.

Zum Verriegeln dienen Haken 44, die exzentrisch an einer Welle 46 gelagert sind, welche sich normal zur Mittelebene M erstreckt und ihrerseits am Unterbalken 40 gelagert ist. Die Welle 46 ist mittels einer Kolbenzylindereinheit 48 hin- und herdrehbar zwischen einer Verriegelungsstellung und einer Lösestellung. In der Verriegelungsstellung, die in Fig. 6 abgebildet ist, verbinden die Haken 44 den Unterbalken 40 derart mit dem Oberbalken 42, daß dessen in Fig. 6 dargestelltes vorderes Ende sich bei Betätigung der Klemmvorrichtungen 32 und 34 nicht nach oben biegen kann. In der Öffnungsstellung, die in Fig. 2 mit strichpunktierten Linien angedeutet ist, lassen die Haken 44 einen Spalt zwischen dem Unterbalken 40 und dem Oberbalken 42 frei.

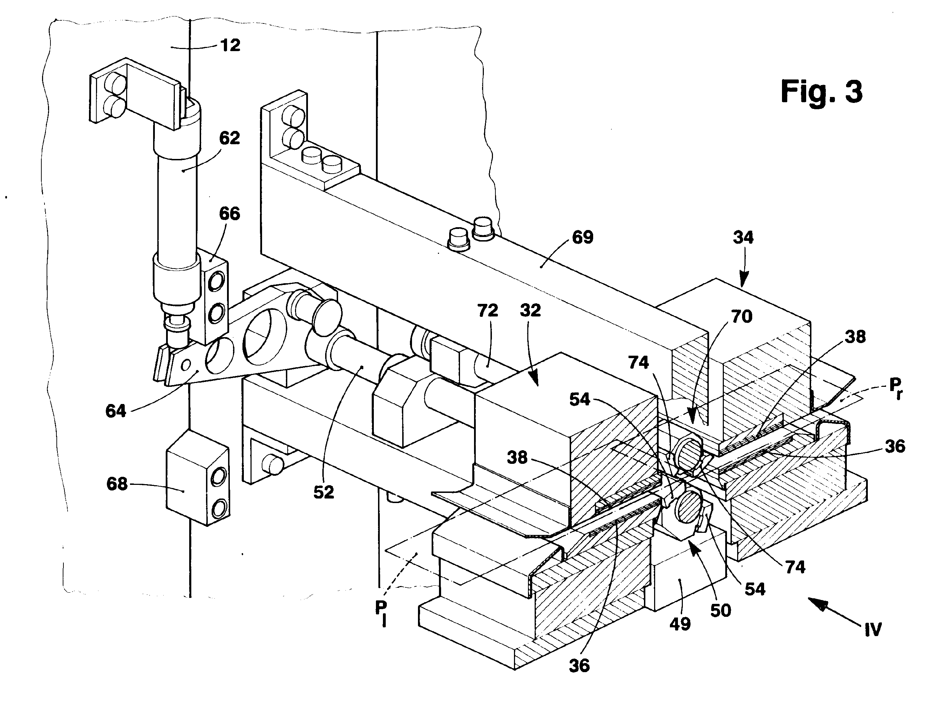

In der Mittelebene M, also zwischen den beiden Klemmvorrichtungen 32 und 34, ist ein waagerecht vom Ständer 12 wegragender unterer Träger 49 angeordnet, der als stromführende Zuleitung zur unteren Elektrodenrolle 26 dient. Am Träger 49 ist eine Stützvorrichtung 50 gelagert, die eine waagerecht in der Mittelebene M liegende Welle 52 aufweist. An der Welle 52 sind zwei zueinander symmetrische, leistenförmige Stützkörper 54 befestigt, die aus gehärtetem Stahl bestehen, sich annähernd über die gesamte Länge der Welle 52 erstrecken und je eine Abweisfläche 56 sowie je eine Anschlagfläche 58 und je eine Auflagefläche 60 aufweisen. Die Anschlagfläche 58 erstreckt sich im rechten Winkel zur Auflagefläche 60, und diese schließt mit der Abweisfläche 56 einen stumpfen Winkel von ungefähr 160° ein. Jeder der Stützkörper 54 läßt sich durch Drehen der Welle 52 wahlweise in eine Stützstellung gemäß Fig. 4a oder in eine Ruhestellung gemäß Fig. 4b bringen. Zum Drehen der Welle 52 ist eine Betätigungsvorrichtung 62 vorgesehen, beispielsweise eine Kolbenzylindereinheit, die über einen Hebel 64 mit der Welle 52 verbunden ist. Durch verstellbare Anschläge 66 und 68 sind im dargestellten Beispiel die Stützstellung und die Ruhestellung des in Fig. 3 und 4 linken Stützkörpers 54 festgelegt.

Senkrecht über der Stützvorrichtung 50, also ebenfalls zwischen den beiden Klemmvorrichtungen 32 und 34, ist ein waagerecht vom Ständer 12 wegragender oberer Träger 69 angeordnet, der als stromführende Zuleitung zur oberen Elektrodenrolle 22 dient. Am Träger 69 ist eine Niederhaltevorrichtung 70 gelagert, die eine waagerecht in der Mittelebene M liegende Welle 72 mit zwei zueinander symmetrischen Niederhaltekörpern 74 aufweist. Die Niederhaltekörper 74 sind ebenfalls aus gehärtetem Stahl und haben in entsprechender Weise wie die Stützkörper 54 je eine Abweisfläche 76, je eine Anschlagfläche 78 und je eine zwischen diesen liegende Auflagefläche 80. Gemäß Fig. 3, 4 und 4a ist die Welle 72 in einer Drehwinkelstellung festgelegt, in der ihr rechter Niederhaltekörper 74 eine Niederhaltestellung einnimmt. Aus dieser Drehwinkelstellung ist die Welle 72 entweder von Hand oder mit einer Vorrichtung, die der Betätigungsvorrichtung 62 entspricht, in eine Stellung drehbar, in der ihr in Fig. 3, 4a und 4b linker Niederhaltekörper 74 wirksam ist. Diese Drehung ist mit einer gegenläufigen Drehung der Welle 52 verbunden und führt dazu, daß dem linken Niederhaltekörper 74 der rechte Stützkörper 54 schräg gegenübersteht.

Beiderseits des mittleren Maschinenteils 10 ist je ein Zuführtisch 82 bzw. 84 angeordnet. Diese beiden Zuführtische 82 und 84 können ortsfest sein und an ihrer Oberseite beispielsweise Rollenbahnen oder Kugelführungen aufweisen, die es ermöglichen, je eine Platine Pₗ bzw. Pᵣ in Richtung des Pfeils xₗ bzw. xᵣ in Richtung zum Mittelteil 10 nahezu reibungsfrei zu verschieben. Im dargestellten Beispiel sind die beiden Zuführtische 82 und 84 jedoch selber in Richtung xₗ und xᵣ zustellbar und zum Vorfixieren je einer Platine Pₗ bzw. Pᵣ ausgebildet.

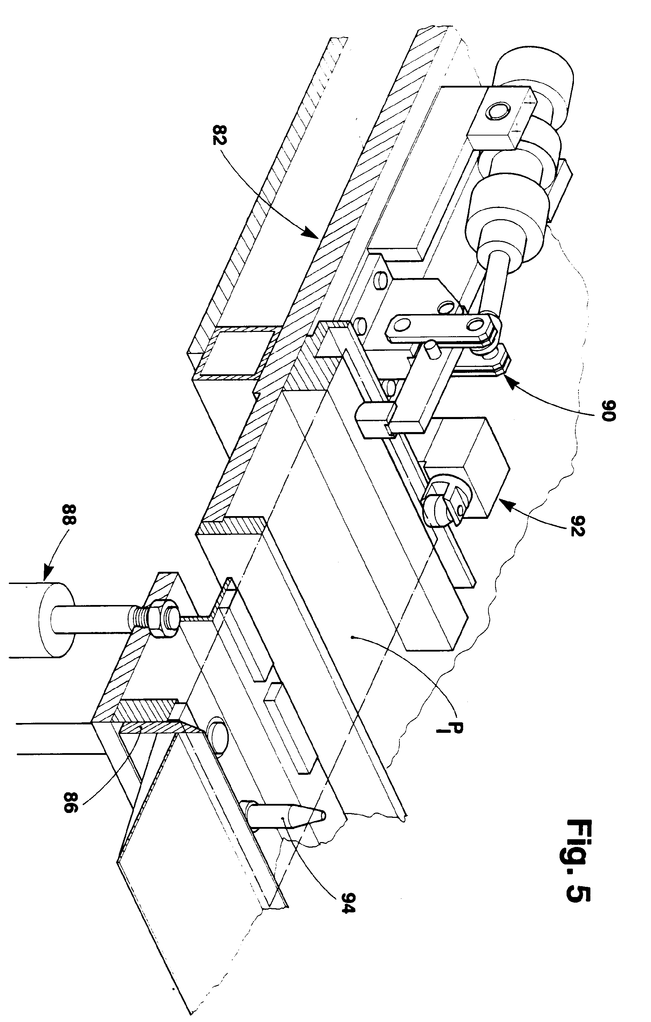

Zu diesem Zweck ist jedem der Zuführtische 82 und 84 ein CNC-gesteuerter Antrieb üblicher Art zugeordnet. Ferner hat jeder der Zuführtische 82 und 84 eine Anschlagleiste 86, die sich parallel zur Mittelebene M, und somit parallel zur vorgesehenen Schweißrichtung z erstreckt und mittels eines Stelltriebes 88 aus ihrer in Fig. 5 abgebildeten Anschlagstellung in eine unwirksame Stellung absenkbar ist. An jedem der beiden Zuführtische 82 und 84 sind in einem Abstand von der Anschlagleiste 86 Aufspannvorrichtungen 90 und Andrückvorrichtungen 92 für je eine der Platinen Pₗ und Pᵣ angeordnet. Schließlich trägt jeder der Zuführtische 82 und 84 einen senkrechten Dorn 94, mit dem sich eine bestimmte Stellung der betreffenden Platine Pₗ bzw. Pᵣ festlegen läßt.

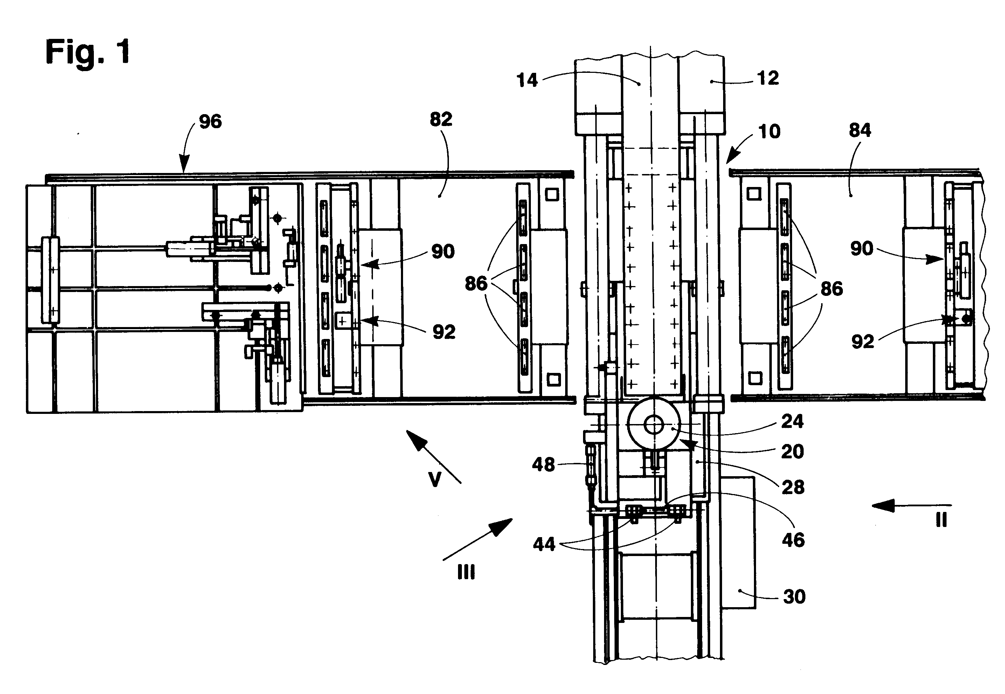

Zum Verschweißen der beiden Platinen Pₗ und Pᵣ wird jede von ihnen, beispielsweise mittels einer Handhabungsvorrichtung 96 der in Fig. 1 angedeuteten Art, auf einem der Zuführtische 82 und 84 abgelegt und gemäß Fig. 5 mit derjenigen Kante K die den zu verschweißenden Rand der betreffenden Platine begrenzt, an die zugehörige Anschlagleiste 86 angelegt und an dieser durch die zugehörigen Andrückvorrichtungen 92 anliegend gehalten, während die Platine derart verschoben wird, bis sie auch am zugehörigen Dorn 94 anliegt, wodurch die Platine in bezug auf den zugehörigen Zuführtisch 82 bzw. 84 eindeutig festgelegt ist. Sodann werden die zugehörigen Aufspannvorrichtungen 90 betätigt, so daß jede der Platinen Pₗ und Pᵣ auf dem zugehörigen Zuführtisch 82 bzw. 84 festgespannt wird. Anschließend werden Stelltriebe 88 betätigt, so daß die Anschlagleisten 86 in ihre Ruhestellung gelangen und die miteinander zu verschweißenden Ränder der Platinen Pₗ und Pᵣ freiliegen.

Sodann werden die Zuführtische 82 und 84 numerisch gesteuert aus ihrer in Fig. 1 und 5 abgebildeten Aufspannposition rechtwinklig zur Mittelebene M in Richtung xₗ bzw. xᵣ bewegt. Dabei gleitet der zu verschweißende Rand der Platine Pₗ gemäß Fig. 3 und 4a über die Abweisfläche 56 des linken Stützkörpers 54, der seine Stützstellung einnimmt. Schließlich gelangt die Platine Pₗ in eine Schweißstellung, in der ihr Rand auf der Auflagefläche 60 aufliegt und die Kante K dieses Randes eine Stellung in unmittelbarer Nachbarschaft zur Anschlagfläche 78 des rechten Niederhaltekörpers 74 erreicht. Diese Anschlagfläche 78 wird jedoch als solche nicht wirksam; sie ist nur dann erforderlich, wenn der Zuführtisch 82 nicht CNC-gesteuert, sondern beispielsweise von einer Rollenbahn gebildet ist.

In entsprechender Weise wird die Platine Pᵣ, nachdem sie auf dem Zuführtisch 84 justiert und festgespannt worden ist, durch dessen Bewegung in Richtung des Pfeils xᵣ nach links verschoben, wobei ihr zu verschweißender Rand von der Abweisfläche 76 des rechten Niederhaltekörpers 74 nach unten gedrückt wird und die freie Kante dieses Randes die Anschlagfläche 58 des linken Stützkörpers 54 nahezu erreicht. Der Rand der Platine Pᵣ liegt dann von unten her an der waagerechten Anlagefläche 80 des rechten Niederhaltekörpers 74 an. Durch die gegenseitige Zuordnung des linken Stützkörpers 54 und des rechten Niederhaltekörpers 74 ist eindeutig festgelegt, daß der Rand der rechten Platine Pᵣ unter den Rand der linken Platine Pₗ zu liegen kommt.

Nun wird die Stützvorrichtung 50 entgegen dem Uhrzeigersinn aus der Stützstellung gemäß Fig. 4a in die Ruhestellung gemäß Fig. 4b gedreht, in der die Platinen Pₗ und Pᵣ von der Stützvorrichtung 50 nicht mehr berührt werden. Dabei federt der Rand der Platine Pₗ etwas nach unten und liegt dann in einer Ebene, die durch die beiden Klemmvorrichtungen 32 und 34 festgelegt ist, auf dem Rand der Platine Pᵣ, wobei die beiden Platinen auch von der Niederhaltevorrichtung 70 nicht mehr berührt werden. Sodann werden die beiden Klemmvorrichtungen 32 und 34 betätigt, wodurch die beiden Platinen Pₗ und Pᵣ mit der vorgesehenen Überlappung in bezug zueinander und zum Schweißwagen 38 festgelegt werden. Anschließend werden die Aufspannvorrichtungen 90 und Andrückvorrichtungen 92 an beiden Zuführtischen 82 und 84 unwirksam gemacht, und diese werden in ihre Ausgangsstellung gemäß Fig. 1 zurückgefahren.

Nun wird der Schweißwagen 28 zusammen mit den beiden festgeklemmten Platinen Pₗ und Pᵣ in Schweißrichtung z in Bewegung gesetzt. Sobald die Vorderkanten der einander überlappenden Ränder der Platinen Pₗ und Pᵣ zwischen den Elektrodenrollen 22 und 26 liegen, beginnt die Schweißung nach einem bestimmten Schweißstrom-Elektrodenkraft-Programm. Es ist auch möglich, die Platinen Pₗ und Pᵣ so in die Klemmvorrichtungen 32 und 34 einzulegen, daß die vorderen Kanten der Schweißnaht unmittelbar unter den Elektroden 22 und 26 zu liegen kommen. In diesem Fall starten die Schweißbewegung des Schweißwagens 28 und das Schweißstrom-Elektrodenkraft-Programm gleichzeitig.

Sobald die Schweißung beendet ist, werden die Klemmvorrichtungen 32 und 34 geöffnet, so daß sie die Platinen Pₗ und Pᵣ freigeben. Anschließend werden die Haken 44 nach unten geschwenkt, und die miteinander verschweißten Platinen Pₗ und Pᵣ werden nach vorne zwischen Unterbalken 40 und Oberbalken 42 herausgezogen.

## Patentansprüche

1. Platinenschweißmaschine mit
- einem mittleren Maschinenteil (10), an dem zwei Klemmvorrichtungen (32, 34) für je eine Platine (Pₗ, Pᵣ) sowie eine Schweißvorrichtung (20) zum Verschweißen von einander überlappenden Rändern der Platinen (Pₗ, Pᵣ) angeordnet sind,
- einem Antrieb (30) zum Erzeugen einer Relativbewegung längs der vorgesehenen Schweißnaht zwischen der Schweißvorrichtung (20) und den Klemmvorrichtungen (32, 34) und
- zwei auf je einer Seite des mittleren Maschinenteils (10) angeordneten Zuführtischen (80, 82), auf denen sich je eine Platine (Pₗ, Pᵣ) quer zur vorgesehenen Schweißnaht durch je eine der Klemmvorrichtungen (32, 34) hindurch in eine Überlappungsstellung zuführen läßt,
dadurch **gekennzeichnet,** daß
zwischen den beiden Klemmvorrichtungen (32, 34) zum Abstützen des zu verschweißenden Randes der auf einem der beiden Zuführtische (80) zugeführten Platine (Pₗ) eine Stützvorrichtung (50) angeordnet ist, die aus einer Stützstellung (Fig. 4a) , in der sie den zu verschweißenden Rand der betreffenden Platine (Pₗ) abstützt, in eine Ruhestellung (Fig. 4b) bewegbar ist, in der sie diesen Rand sich auf den Rand der anderen Platine (Pᵣ) auflegen läßt.

2. Schweißmaschine nach Anspruch 1,
dadurch **gekennzeichnet,** daß die Stützvorrichtung (50) um eine zur vorgesehenen Schweißnaht parallele Achse zwischen der Stützstellung (Fig. 4a) und der Ruhestellung (Fig. 4b) hin- und herdrehbar ist.

3. Schweißmaschine nach Anspruch 1 oder 2,
dadurch **gekennzeichnet,** daß zwischen den beiden Klemmvorrichtungen (32, 34) ferner eine Niederhaltevorrichtung (70) für den zu verschweißenden Rand der anderen Platine (Pᵣ₎ angeordnet ist.

4. Schweißmaschine nach den Ansprüchen 2 und 3,
dadurch **gekennzeichnet,** daß
- die Stützvorrichtung (50) zwei symmetrisch angeordnete Stützkörper (54) aufweist,
- die Niederhaltevorrichtung (70) zwei symmetrisch angeordnete Niederhaltekörper (74) aufweist, und
- Stützvorrichtung (50) und Niederhaltevorrichtung (70) gegenläufig um je eine zur vorgesehenen Schweißnaht parallele Achse zwischen zwei Endstellungen hin- und herdrehbar sind, in denen jeweils ein Stützkörper (54) einem Niederhaltekörper (74) schräg gegenübersteht.

5. Schweißmaschine nach Anspruch 4,
dadurch **gekennzeichnet,** daß
- jeder Stützkörper (54) eine Abweisfläche (56) für die von ihm zu stützende Platine (Pₗ) sowie eine Anschlagfläche (58) für die von einem Niederhaltekörper (74) niederzuhaltende Platine (Pᵣ) aufweist, und
- jeder Niederhaltekörper (74) eine Abweisfläche (76) für die von ihm niederzuhaltende Platine (Pᵣ) sowie eine Anschlagfläche (76) für die von einem Stützkörper (54) zu stützende Platine (Pₗ) aufweist.

6. Schweißmaschine nach einem der Ansprüche 1 bis 5,
dadurch **gekennzeichnet,** daß die beiden Zuführtische (80, 82) CNC-gesteuert quer zur vorgesehenen Schweißnaht zustellbar sind und je mindestens eine Aufspannvorrichtung (90) für eine Platine (Pₗ bzw. Pᵣ) sowie je eine Anschlagleiste (86) tragen, die parallel zur vorgesehenen Schweißnaht angeordnet und aus einer Anschlagstellung zum Vorjustieren der zugehörigen Platine (Pₗ bzw. Pᵣ) in eine Ruhestellung bewegbar ist.

## Claims

1. Body blank welding machine having
- a central machine portion (10) on which are disposed two clamping devices (32, 34), one for each body blank (Pₗ, Pᵣ) as well as a welding device (20) for welding together overlapping margins of the blanks (Pₗ, Pᵣ),
- a drive (30) to produce a relative movement, along the proposed weld seam, between the welding device (20) and the clamping devices (32, 34), and
- two feed tables (80, 82) which are disposed one each side of the central machine portion (10) and each of which is arranged to feed a blank (Pₗ, Pᵣ), transversely to the proposed weld seam, through one of the clamping devices (32, 34) into an overlapping position,
characterised in that disposed between the two clamping devices (32, 34) to support the margin to be welded of the body blank (Pₗ) fed onto one of the feed tables (80) is a supporting device (50) which is displaceable out of a supporting position (Fig. 4a) in which it supports the margin to be welded of the associated blank (Pₗ), into a position of rest (Fig. 4b) in which it allows said margin to rest on the margin of the other blank (Pᵣ).

2. Welding machine according to claim 1,
characterised in that the supporting device (50) is privotable back and forth, about an axis parallel to the intended weld seam, between the supporting position (Fig. 4a) and the position of rest (Fig. 4b).

3. Welding machine according to claim 1 or 2,
characterised in that in addition a holding-down device (70) for the margin to be welded of the other body blank (Pᵣ) is disposed between the clamping devices (32, 34).

4. Welding machine according to claims 2 and 3,
characterised in that
- the supporting device (50) comprises two supporting members (54) arranged symmetrically,
- the holding-down device (70) comprises two holding-down members (74) arranged symmetrically, and
- supporting device (50) and holding-down device (70) are pivotable back and forth in opposite directions, each about an axis parallel to the intended weld seam, between two end positions in each of which a supporting member (54) is situated obliquely opposite a holding-down member (74).

5. Welding machine according to claim 4,
characterised in that
- each supporting member (54) has a deflecting surface (56) for the body blank (Pₗ) to be supported by it, and a stop surface (58) for the body blank (Pᵣ) to be held down by a holding-down member (74), and
- each holding-down member (74) has a deflecting surface (76) for the body blank (Pᵣ) to be held down by it and a stop surface (76) for the body blank (Pₗ) to be supported by a supporting member (54).

6. Welding machine according to any one of claims 1 to 5,
characterised in that the two feed tables (80, 82) are feedable under CNC control, transversely to the proposed weld seam, and each carries at least one clamping device (90) for a body blank (Pₗ) and a locating stop (86) which is arranged parallel to the proposed weld seam and is displaceable out of a stop position for the preadjustment of the associated body blank (Pₗ or Pᵣ) into a position off rest.

## Revendications

1. Machine à souder les flans, comprenant:
- une partie centrale de machine (10) sur laquelle sont disposés deux dispositifs serre-flan (32, 34) destinés chacun à un flan (Pₗ, Pᵣ), ainsi qu'un dispositif de soudage (20) servant à souder les bords se chevauchant des flans (Pₗ, Pᵣ),
- un entraînement (30) servant à produire un déplacement relatif, le long du cordon de soudure prévu, entre le dispositif de soudage (20) et les dispositifs serre-flan (32, 34) et
- deux tables d'acheminement (82, 84) qui sont disposées chacune sur un côté de la partie centrale de machine (10) et sur chacune desquelles un flan (Pₗ, Pᵣ) peut être acheminé par l'un, associé, des dispositifs serre-flan (32, 34) transversalement au cordon de soudure prévu et jusqu'en une position de recouvrement,
caractérisée en ce que, pour permettre l'appui du bord à souder du flan (Pₗ) guidé sur l'une des deux tables d'acheminement (80), il est disposé, entre les deux dispositifs serre-flan (32, 34), un dispositif d'appui (50) qui est agencé de façon à pouvoir être déplacé d'une position d'appui (figure 4a), dans laquelle il sert d'appui au bord à souder du flan (Pₗ) considéré, à une position de repos (figure 4b) dans laquelle il fait se reposer ce bord sur le bord de l'autre flan (Pᵣ).

2. Machine à souder suivant la revendication 1, caractérisée en ce que le dispositif d'appui (50) est agencé de façon à pouvoir pivoter dans un sens et dans l'autre autour d'un axe parallèle au cordon de soudure prévu, entre la position d'appui (figure 4a) et la position de repos (figure 4b).

3. Machine à souder suivant la revendication 1 ou 2, caractérisée en ce qu'il est en outre disposé, entre les deux dispositifs serre-flan (32, 34), un dispositif presse-flan (70) destiné au bord à souder de l'autre flan (Pᵣ).

4. Machine à souder suivant les revendications 2 et 3, caractérisée en ce que:
- le dispositif d'appui (50) comprend deux blocs d'appui (54) disposés symétriquement,
- le dispositif presse-flan (70) comprend deux blocs presse-flan (74) disposés symétriquement et
- le dispositif d'appui (50) et le dispositif presse-flan (70) sont agencés de façon à pouvoir pivoter dans un sens et dans l'autre, dans des sens respectivement opposés entre eux et chacun autour d'un axe parallèle au cordon de soudure prévu, entre deux positions extrêmes dans chacune desquelles l'un des blocs d'appui (54) fait face d'une manière inclinée à l'un des blocs presse-flan (74).

5. Machine à souder suivant la revendication 4, caractérisée en ce que:
- chaque bloc d'appui (54) comporte une surface déflectrice (56), destinée au flan (Pₗ) qui doit prendre appui sur ce bloc, ainsi qu'une surface de butée (58), destinée au flan (Pᵣ) qu'un bloc presse-flan (74) doit repousser, et
- chaque bloc presse-flan (74) comporte une surface déflectrice (76), destinée au flan (Pᵣ) que ce bloc doit repousser, ainsi qu'une surface de butée (76) destinée au flan (Pₗ) devant prendre appui sur un bloc d'appui (54).

6. Machine à souder suivant l'une des revendications 1 à 5, caractérisé en ce que les deux tables d'acheminement (82, 84) sont agencées de façon qu'un mouvement d'avancement puisse leur être conféré transversalement au cordon de soudure prévu en étant commandées à l'aide d'une commande numérique par ordinateur et portent chacune au moins un dispositif de bridage (90), destiné à un flan (Pₗ ou Pᵣ), ainsi qu'une barre de butée (86) qui est disposée parallèlement au cordon de soudure prévu et est agencée de façon à pouvoir être déplacée d'une position de butée, servant à un préréglage de position du flan (Pₗ ou Pᵣ) correspondant, à une position de repos.
